# EUROPÄISCHE PATENTANMELDUNG

(11) **EP 0 692 898 A1**
(43) Veröffentlichungstag der Anmeldung: **17.01.1996**
(21) Anmeldenummer: 95101905.8
(22) Anmeldetag: 11.02.1995
(51) Int. Cl.: H04M 1/00

(54) **Vorrichtung für die Entnahme von Informationen aus einem verkabelten Informationsnetz sowie für die Eingabe von Informationen in dieses Informationsnetz**

(30) Priorität: 12.07.1994 DE 9410971 U
(71) Anmelder: Dipl.-Ing. Dr. Ernst Vogelsang GmbH & Co. KG, D-45699 Herten (DE)
(72) Erfinder: Vogelsang, Horst, DE-45699 Herten (DE)
(74) Vertreter: Andrejewski, Walter, Dr.

(57) **Zusammenfassung**

Vorrichtung für die Entnahme von Informationen aus einem verkabelten Informationsnetz sowie für die Eingabe von Informationen in dieses Informationsnetz. Das Informationsnetz ist Leitungen der Engergieversorgnung, insbesondere der Gasversorgung zugeordnet. Die Vorrichtung besteht in ihrem grundsätzlichen Aufbau aus einem Schilderpfahl (1) mit einem Kunststoffrohr (2) und einem Telephonterminal (3) mit Steckdose zum Anschluß eines Telephons mit Hilfe eines in die Telephonsteckdose eingeführten Telephonsteckers. Das Telephonterminal ist in dem Kunststoffrohr angeordnet. Das Kunststoffrohr weist im Bereich des Telephonterminals eine Wandausnehmung (4) auf, welche die Telephonsteckdose zugänglich macht. Die Wandausnehmung ist durch eine Wandausnehmungsklappe (5) mit Schloß verschließbar.

## Beschreibung

Die Erfindung betrifft eine Vorrichtung für die Entnahme von Informationen aus einem verkabelten Informationsnetz sowie für die Eingabe von Informationen in dieses Informationsnetz, welches Informationsnetz Leitungen der Energieversorgung, insbesondere der Gasversorgung, zugeordnet ist. Die Leitungen der Energieversorgung sind erdverlegt angeordnet und trassengeführt. Längs der Leitungen bzw. Trassen sind Schilderpfähle angeordnet, die tafelförmige Kennzeichnungsschilder tragen. Sie bestehen heute regelmäßig aus Kunststoff einer verhältnismäßig großen Wanddicke. Es sind auch solche Schilderpfähle bekannt, die zusätzliche Funktionen erfüllen, z.B. Meßstellenterminals von Meßsystemen oder Schaltterminals tragen, die mit den Leitungen zusammenwirken. Im übrigen sind im Zusammenhang mit Leitungen der Energieversorgung, insbesondere der Gasversorgung, Maßnahmen bekannt, die längs einer Leitung oder Trasse eine Telephonkommunikation mit einer Zentrale oder benachbarten, für eine Telephonkommunikation eingerichteten Stellen erlauben. Dazu sind Telephonterminals mit Steckdosen zum Anschluß eines Telephons mit Hilfe eines in die Telephonsteckdose eingeführten Telephonsteckers üblich, wobei an die genannten Bauteile die entsprechenden Leiter bzw. Kabel angeschlossen sind. Die Telephonsteckdosen lassen bei Anschluß eines Telephonapparates die entsprechende Telephonkommunikation zu.

Im Rahmen der bekannten Maßnahmen, von denen die Erfindung ausgeht, sind die Telephonterminals mit besonderen Gehäusen aus Gußeisen versehen, die mit einer Klappe versehen sind, die feuchtigkeitsdicht auf das im übrigen feuchtigkeitsdichte Gehäuse aufsetzbar und mit Hilfe eines Schlüssels verschließbar sind. Diese Gehäuse sind mit Schellen an den Schilderpfählen befestigt. Das gilt auch für die Meßstellenterminals und die Schaltterminals, die entsprechend an eigenen Schilderpfählen angeordnet sind. Die insoweit bekannten Maßnahmen sind aufwendig.

Der Erfindung liegt primär das technische Problem zugrunde, eine Vorrichtung für die Entnahme von Informationen aus einem verkabelten Informationsnetz sowie für die Eingabe von Informationen in dieses Informationsnetz, welches Informationsnetz Leitungen der Energieversorgung, insbesondere der Gasversorgung zugeordnet ist, zu schaffen, bei den besondere Gehäuse des beschriebenen Aufbaus für die Telephonterminals nicht mehr erforderlich sind.

Zur Lösung dieses technischen Problems ist Gegenstand der Erfindung eine Vorrichtung für die Entnahme von Informationen aus einem verkabelten Informationsnetz sowie für die Eingabe von Informationen in dieses Informationsnetz, welches Informationsnetz Leitungen der Energieversorgung, insbesondere der Gasversorgung, zugeordnet ist, bestehend aus
einem Schilderpfahl mit einem Kunststoffrohr und
einem Telephonterminal mit Telephonsteckdose zum Anschluß eines Telephons mit Hilfe eines in die Telephonsteckdose eingeführten Telephonsteckers,
wobei das Telephonterminal in dem Kunststoffrohr angeordnet ist und das Kunststoffrohr im Bereich des Telephonterminals eine Wandausnehmung aufweist, welche die Telephonsteckdose zugänglich macht und die durch eine abnehmbare Wandausnehmungsklappe mit Schloß verschließbar ist.

Nach bevorzugter Ausführungsform ist die Telephonsteckdose des Telephonterminals auf einem Haltestück montiert, welches in Richtung der Kunststoffrohrachse verläuft und welches mit Schrauben, die in Sackbohrungen in der Wandung des Kunststoffrohres eingeschraubt sind, in dem Kunststoffrohr befestigt ist. Insoweit nutzt die Erfindung die Tatsache, daß die Kunststoffrohre von Schilderpfählen eine verhältnismäßig große Wanddicke aufweisen und folglich die Befestigung der Haltestücke wie beschrieben erfolgen kann, ohne das es erforderlich ist, durchgehende Bohrungen in der Wandung des Kunststoffrohres anzubringen. Um eine ausreichende Abdichtung zu verwirklichen, lehrt die Erfindung, daß die Wandausnehmungsklappe ein in die Wandausnehmung eingepaßtes Paßteil und einen Überstand aufweist. Auf diese Weise läßt sich zumeist ohne Schwierigkeiten eine ausreichende Labyrinthdichtung verwirklichen. Es besteht aber auch die Möglichkeit, die Wandausnehmungsklappe oder umgekehrt das Kunststoffrohr im Bereich der Wandausnehmung mit Dichtungsmitteln auszurüsten.

Bei der erfindungsgemäßen Vorrichtung soll die Wandausnehmungsklappe leicht aufsetzbar und abnehmbar sein, damit auf einfache Weise das Telephonterminal zugänglich gemacht werden kann bzw. der Zugang durch die Wandausnehmungsklappe verhindert werden kann. Dazu lehrt die Erfindung, daß das Schloß Verschlußriegel aufweist, die parallel zur Kunststoffrohrachse verlaufen und die auf dem Paßteil angeordnet sowie mit Hilfe eines Schlüssels beidseitig ein- und ausfahrbar sind. Auf diese Weise wird erreicht, daß die Riegel mit ihren Enden innenseitig die Wand des Kunststoffrohres hinterfassen, wenn die Wandausnehmungsklappe verschlossen aufgesetzt ist. Im Rahmen der Erfindung liegt es, das Telephonterminal, das sich in dem Kunststoffrohr befindet, zusätzlich mit einem rückstellfederbelasteten Klappdeckel zu versehen.

Wie bereits erwähnt, muß das Telephonterminal mit der Telephonsteckdose ausreichend feuchtigkeitssicher untergebracht sein. Das geschieht im Rahmen der bekannten Maßnahmen dadurch, daß das Telephonterminal in dem beschriebenen Gehäuse angeordnet ist, welches an einem Schilderpfahl befestigt ist. Demgegenüber geht die Erfindung von der Erkenntnis aus, daß der Innenraum eines Schilderpfahls üblicher Ausführungsform ausreichend feuchtigkeitsdicht ist, da er fußseitig und kopfseitig verschlossen ist. Die Erfindung nutzt diese Tatsache und kapselt das Telephonterminal durch das Kunststoffrohr selbst. Das Telephonterminal kann, wie beschrieben, in dem Kunststoffrohr leicht untergebracht werden, das ist aber nichtsdestoweniger leicht zugänglich, wenn von der Wandausnehmung die Wandausnehmungsklappe abgenommen wird.

Wie bereits erwähnt, sind bei Leitungen der Energieversorgung, insbesondere der Gasversorgung, bzw. längs der entsprechenden Trassen regelmäßig eine Mehrzahl von Schilderpfählen aufgestellt. Alle oder einzelne davon können mit der erfindungsgemäßen Vorrichtung ausgerüstet sein.

Der Erfindung liegt in weiterer Ausbildung und Verbesserung der beschriebenen Vorrichtung die Aufgabe zugrunde, die Vorrichtung für weitere Funktionen einzurichten. Dazu lehrt die Erfindung, daß das Kunststoffrohr außerdem zumindest eine weitere Wandausnehmung aufweist, die mit einer Wandausnehmungsklappe des beschriebenen Aufbaus verschließbar ist, wobei in dem Kunststoffrohr im Bereich dieser weiteren Wandausnehmung ein Meßstellenterminal oder ein Schaltterminal untergebracht ist. Nach bevorzugter Ausführungsform der Erfindung sind zwei weitere Wandausnehmungen mit einer Wandausnehmungsklappe angeordnet, wobei im Bereich der einen weiteren Wandausnehmung das Meßstellenterminal mit Klemmplatte sowie im Bereich der anderen weiteren Wandausnehmung das Schaltterminal mit Schaltelementen angeordnet sind. Im Rahmen der Erfindung liegt es, die Wandausnehmungsklappen zugleich als Kennzeichnungsträger zur Identifizierung der Funktionen Telephonterminal, Meßstellenterminal und Schaltterminal auszubilden. Die als Kennzeichnungsträger ausgebildeten Wandausnehmungsklappen weisen zweckmäßigerweise Farbkennzeichnungen auf.

Im folgenden wird die Erfindung anhand einer lediglich ein Ausführungsbeispiel darstellenden Zeichnung ausführlicher erläutert. Es zeigen in schematischer Darstellung
- Fig. 1: eine Ansicht einer erfindungsgemäßen Vorrichtung bei abgenommener Wandausnehmungsklappe in einem ausschnittsweise gezeichneten Schilderpfahl,
- Fig. 2: eine Ansicht der Wandausnehmungsklappe,
- Fig. 3: eine Draufsicht auf den Gegenstand der Fig. 2,
- Fig. 4: einen Schnitt in Richtung A-A durch den Gegenstand der Fig. 1,
- Fig. 5: eine Draufsicht auf den Gegenstand der Fig. 1,
- Fig. 6: die Ansicht einer erfindungsgemäßen Vorrichtung mit vollständigem Schilderpfahl und
- Fig. 7: eine Seitenansicht des Gegenstandes der Fig. 6, ausschnittsweise.

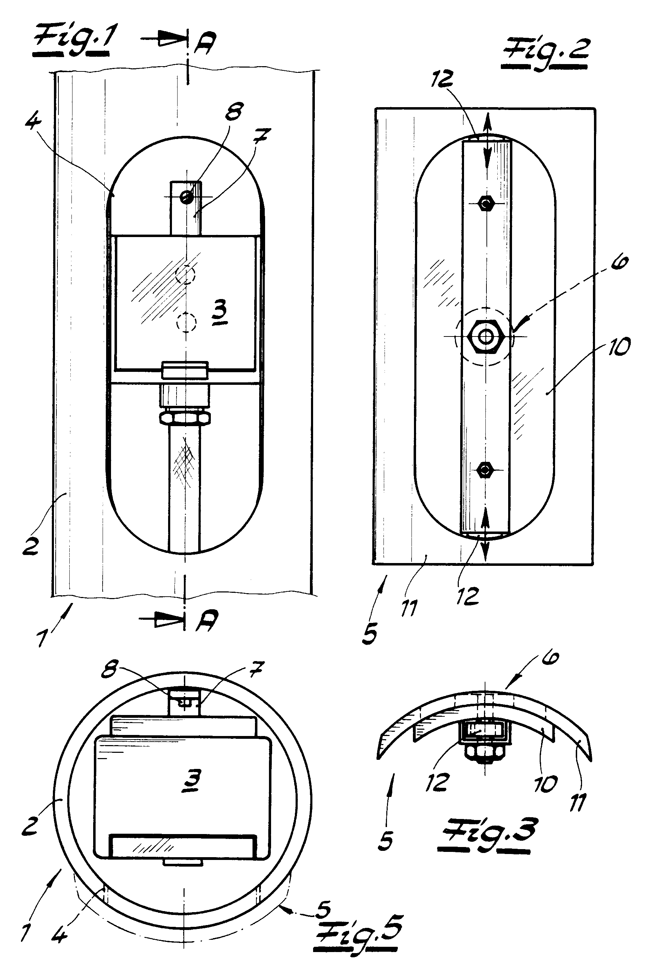

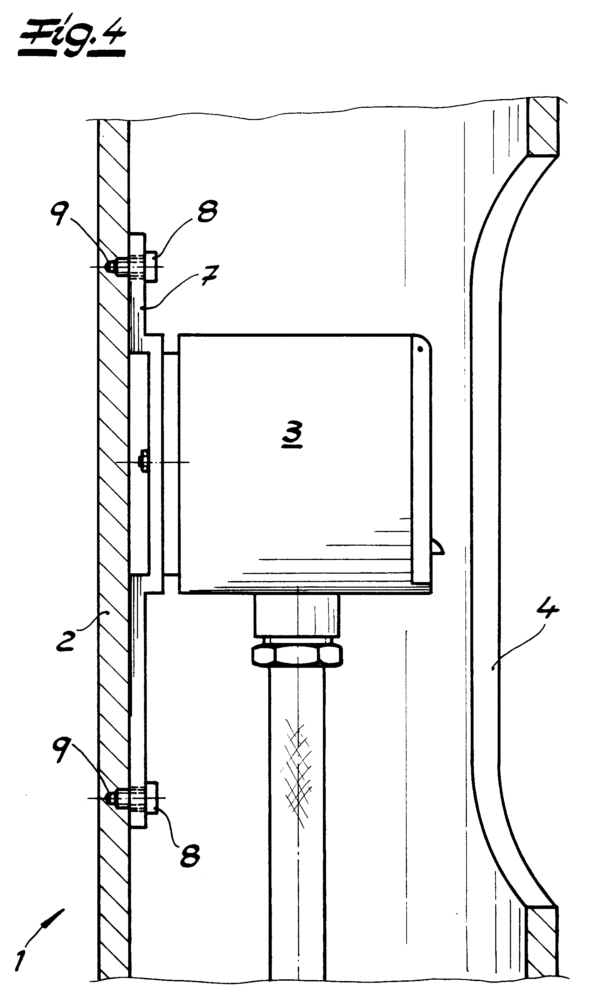

Die in den Fig. 1 bis 5 dargestellte Vorrichtung dient für die Entnahme von Informationen aus einem verkabelten Informationsnetz sowie für die Eingabe von Informationen in dieses Informationsnetz. Das Informationsnetz wurde nicht gezeichnet und ist nicht Gegenstand der Erfindung. Es ist Leitungen der Energieversorgung, insbesondere der Gasversorgung, zugeordnet, - und längs dieser trassengeführten Leitungen oder längs der Trassen sind Schilderpfähle angeordnet.

Die Erfindung besteht aus einem Schilderpfahl 1 mit einem Kunststoffrohr 2 und Telephonterminal 3 mit Telephonsteckdose zum Anschluß eines Telephons mit Hilfe eines in die Telephonsteckdose eingeführten Telephonsteckers. Die Telephonsteckdose ist in dem Kunststoffrohr 2 angeordnet und das Kunststoffrohr 2 weist im Bereich des Telephonterminals 3 eine Wandausnehmung 4 auf, die das Telephonterminal 3 zugänglich macht. Sie ist durch eine abnehmbare Wandausnehmungsklappe 5 mit Schloß 6 verschließbar.

Im Ausführungsbeispiel und nach bevorzugter Ausführungsform der Erfindung ist das Telephonterminal 3 auf einem Haltestück 7 montiert, welches in Richtung der Kunststoffrohrachse verläuft und welches mit Schrauben 8, die in Sackbohrungen 9 in der Wandung des Kunststoffrohres 2 eingeschraubt sind, in dem Kunststoffrohr 2 befestigt ist.

Man erkennt in der Fig. 2, daß die Wandausnehmungsklappe 5 ein in die Wandausnehmung 4 eingepaßtes Paßteil 10 und einen Überstandsrand 11 aufweist. Ein Dichtungsmittel ist im Ausführungsbeispiel an der Wandausnehmungsklappe 5 nicht vorgesehen. Man erkennt, daß das Schloß 6 Verschlußriegel 12 aufweist, die parallel zur Kunststoffrohrachse verlaufen und auf dem Paßteil 10 angeordnet sowie mit Hilfe eines Schlüssels beidseits ein- und ausfahrbar sind, wie in der Fig. 1 durch Doppelpfeile angedeutet ist.

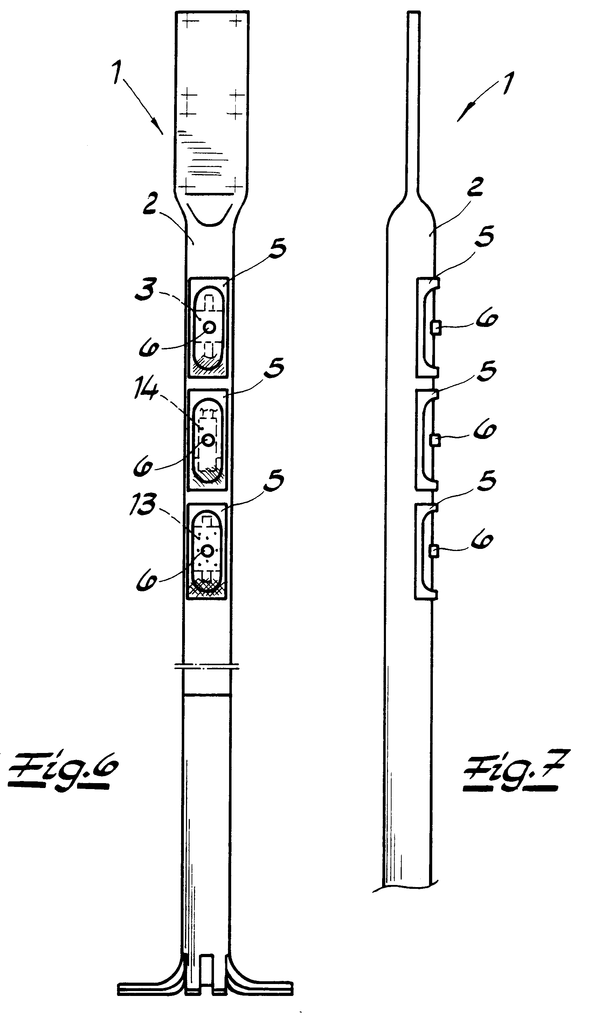

In den Fig. 6 und 7 erkennt man eine weitere Ausbildung der in den Fig. 1 bis 5 beschriebenen Vorrichtung. Aus einer vergleichenden Betrachtung der Fig. 6 und 7 entnimmt man, daß das Kunststoffrohr 2 außer der Wandausnehmung für das Telephonterminal zumindest eine weitere Wandausnehmung schier aufweist, die mit einer Wandausnehmungsklappe 5 des beschriebenen Aufbaus verschließbar ist, und wobei in dem Kunststoffrohr 2 im Bereich dieser weiteren Wandausnehmung 4 ein Meßstellenterminal 13 oder ein Schaltterminal 14 untergebracht ist. Im Ausführungsbeispiel nach bevorzugter Ausführungsform der Erfindung sind zwei weitere Wandausnehmungen 4 mit einer Wandausnehmungsklappe 5 angeordnet, wobei im Bereich der einen weiteren Wandausnehmung 4 das Meßstellenterminal 13 mit Klemmplatte sowie im Bereich der anderen weiteren Ausnehmung 4 das Schaltterminal 14 mit Schaltelementen, z.B. Schaltern, Relais, Schaltkästen und dergleichen, angeordnet sind.

Bei der Ausführungsform nach den Fig. 6 und 7 sind die Wandausnehmungsklappen 5 zugleich als Kennzeichnungsträger zur Identifizierung der Funktionen Telephonterminal 3, Meßstellenterminal 13 und Schaltterminal 14 ausgebildet. Die als Kennzeichnungsträger ausgebildeten Wandausnehmungsklappen 5 mögen Farbkennzeichnungen aufweisen, was in der Fig. 6 durch untere Schraffur angedeutet wurde.

## Patentansprüche

1. Vorrichtung für die Entnahme von Informationen aus einem verkabelten Informationsnetz sowie für die Eingabe von Informationen in dieses Informationsnetz, welches Informationsnetz Leitungen der Energieversorgung, insbesondere der Gasversorgung, zugeordnet ist, bestehend aus
einem Schilderpfahl (1) mit einem Kunststoffrohr (2) und
einem Telephonterminal (3) mit Steckdose zum Anschluß eines Telephons mit Hilfe eines in die Telephonsteckdose eingeführten Telephonsteckers,
wobei das Telephonterminal (3) in dem Kunststoffrohr (2) angeordnet ist und das Kunststoffrohr (2) im Bereich des Telephonterminals (3) eine Wandausnehmung (4) aufweist, welche die Telephonsteckdose zugänglich macht und die durch eine abnehmbare Wandausnehmungsklappe (5) mit Schloß (6) verschließbar ist.

2. Vorrichtung nach Anspruch 1, wobei die Telephonsteckdose (3) auf einem Haltestück (7) montiert ist, welches in Richtung der Kunststoffrohrachse verläuft und welches mit Schrauben (8), die in Sackbohrungen (9) in der Wandung des Kunststoffrohres (2) eingeschraubt sind, in dem Kunststoffrohr (2) befestigt ist.

3. Vorrichtung nach einem der Ansprüche 1 oder 2, wobei die Wandausnehmungsklappe (5) ein in die Wandausnehmung (4) eingepaßtes Paßteil (10) und einen Überstandsrand (11) aufweist.

4. Vorrichtung nach einem der Ansprüche 1 bis 3, wobei das Schloß Verschlußriegel (12) aufweist, die parallel zur Kunststoffrohrachse verlaufen und auf dem Paßteil (10) angeordnet sowie mit Hilfe eines Schlüssels beidseitig ein- und ausfahrbar sind.

5. Vorrichtung nach einem der Ansprüche 1 bis 4, wobei das Kunststoffrohr (2) außerdem zumindest eine weitere Wandausnehmung (4) aufweist, die mit einer Wandausnehmungsklappe (5) des beschriebenen Aufbaus verschließbar ist, und wobei in dem Kunststoffrohr (2) im Bereich dieser weiteren Wandausnehmung (4) ein Meßstellenterminal (13) oder ein Schaltterminal (14) untergebracht ist.

6. Vorrichtung nach Anspruch 5, wobei zwei weitere Wandausnehmungen (4) mit einer Wandausnehmungsklappe (5) angeordnet sind, wobei im Bereich der einen weiteren Wandausnehmung (4) das Meßstellenterminal (13) mit Klemmplatte sowie im Bereich der anderen weiteren Wandausnehmung (4) das Schaltterminal (14) mit Schaltelementen (z.B. Schalter, Relais, Schaltkästen und dergleichen) angeordnet sind.

7. Vorrichtung nach einem der Ansprüche 5 oder 6, wobei die Wandausnehmungsklappen (5) zugleich als Kennzeichnungsträger zur Indentifizierung der Funktionen Telephonterminal (3), Meßstellenterminal (13) und Schaltterminal (14) augebildet sind.

8. Vorrichtung nach Anspruch 7, wobei die als Kennzeichnungsträger ausgebildete Wandausnehmungsklappe (5) Farbkennzeichnungen aufweist.
